(19) Europäisches Patentamt
European Patent Office
Office européen des brevets

(11) **EP 1 800 930 B1**

(12) **EUROPEAN PATENT SPECIFICATION**

(45) Date of publication and mention
of the grant of the patent:
**02.12.2009  Bulletin 2009/49**

(51) Int Cl.:
***B60K 15/01*** *(2006.01)*      ***B60K 15/07*** *(2006.01)*
***F17C 13/02*** *(2006.01)*

(21) Application number: **05257939.8**

(22) Date of filing: **21.12.2005**

(54) **Hydrogen vehicle gas utilization and refueling system**

Wasserstoffgasversorgungs- und Betankungssystem für Fahrzeug

Système d'alimentation et de ravitaillement d'un véhicule en hydrogène

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.06.2007  Bulletin 2007/26**

(73) Proprietor: **Honda Motor Co., Ltd.**
**Tokyo (JP)**

(72) Inventors:
• **Mathison, Steven R.**
**Torrance, CA 90501 (US)**
• **Matsuo, Shiro**
**Torrance, CA 90501 (US)**

(74) Representative: **Beresford, Keith Denis Lewis**
**Beresford & Co.**
**16 High Holborn**
**London**
**WC1V 6BX (GB)**

(56) References cited:
**WO-A-2004/005792      WO-A-2005/010427**
**WO-A-2006/021699**

• **PATENT ABSTRACTS OF JAPAN vol. 2002, no. 02, 2 April 2002 (2002-04-02) & JP 2001 295996 A (TOYOTA MOTOR CORP), 26 October 2001 (2001-10-26)**
• **PATENT ABSTRACTS OF JAPAN vol. 2003, no. 12, 5 December 2003 (2003-12-05) & JP 2004 084808 A (NISSAN MOTOR CO LTD), 18 March 2004 (2004-03-18)**

## Description

## FIELD OF THE INVENTION

The present invention relates to a system for efficiently evacuating and refueling hydrogen gas from and into multiple high pressure storage tanks such as used on board in motor vehicles and in larger quantities at hydrogen storage and refueling stations.

## BACKGROUND OF THE INVENTION

When hydrogen is used as a fuel in motor vehicles, a hydrogen fuel depot infrastructure for refueling must also be developed. Typically, in the use of hydrogen to power fuel cells or internal combustion engines in motor vehicles, hydrogen is stored in on board fuel tanks maintained at a maximum pressure in the range of about 34.47MPa (5000 psi). In the instance of a fuel cell powered vehicle, utilization of the hydrogen input into the fuel cell stack occurs at about 0.2068 MPa (30psi)). The consumption and evacuation of hydrogen from on board fuel tanks to power a vehicle having a fuel cell or internal combustion engine should smoothly correlate with a motor vehicle operator's desire for on demand control of the speed, acceleration and other power needs of the operator and vehicle. An increase in the energy efficiency of the overall system of fuel depots and vehicle tanks and their interrelationship is a desirable goal.

Hydrogen powered vehicles may use high pressure hydrogen storage tanks to store hydrogen on board. The use of multiple cylindrically shaped small tanks rather than one large tank is preferred for vehicle design purposes. Current practice is simultaneously to evacuate, as needed, the hydrogen equally from each of the multiple tanks having a parallel outlet relationship. Typically, solenoid outlet valves for all tanks are open simultaneously and the pressure decreases equally in all tanks as the hydrogen is consumed when the vehicle is driven.

Designs for hydrogen refueling stations provide apparatus and systems to replenish hydrogen gas in a motor vehicle tank using a cascade filling process in which there are multiple banks of pressurized hydrogen quantities stored in individual tanks at the station. A first bank (with the lowest pressure) is used to equalize pressure with one or more of the separate tanks in a motor vehicle, then the next bank is utilized to equalize with increased pressure in the vehicle tank, and then the next bank, etc., in a sequence until all banks have equalized in pressure or the fill pressure of the vehicle tank(s) has been reached. In this design, if the first bank at a filling station is at a lower pressure than the vehicle tank(s), then the first bank cannot be used in the filling process; consequently, the next bank at the station with a pressure higher than that of the vehicle tank(s)' pressure must be used. As a result, hydrogen stored in the bank(s) on the refilling station side with pressure lower than the vehicle tank(s) cannot be used to replenish the vehicle fuel supply, and the remaining tanks with higher pressure at the refilling station must be used. This necessary sequence depletes the hydrogen in the higher pressure banks, and does not allow the hydrogen in the lower pressure banks to be fully used.

When a hydrogen powered vehicle is filled with hydrogen, the pressurized storage tanks contain two forms of energy: chemical energy from the hydrogen itself, and mechanical and thermal energy associated with the high pressure under which the hydrogen gas is stored. The mechanical energy from the high pressure under which the hydrogen gas is stored is not utilized when a motor vehicle is driven; thus, the mechanical potential energy from storing hydrogen at high pressure is wasted.

The applicant may be further enlightened as to the state of the art by reference to the publication identified as WO 2004/005792.

## BRIEF SUMMARY OF THE INVENTION

In an effort to alleviate at least some of the disadvantages exhibited by the prior art the present invention provides an apparatus and method according to the independent claims attached.

On the refueling station side where the hydrogen station has a limited supply of hydrogen available to fill multiple vehicles, and where a hydrogen station uses the multiple bank cascade fill strategy described above, when the vehicle's tank pressure is greater than any of the station bank pressures, the banks at the station cannot be used to fill the vehicle, and the hydrogen in those banks cannot be utilized. Thus, only banks with pressure higher than that of the vehicle tank(s) are used, depleting the pressure in the banks of higher pressure tanks, resulting in a situation where a succeeding vehicle may not be able to receive a full fill. Using the system described herein, it is an object to enhance the ability of a refilling station to service the fuel needs of hydrogen powered vehicles. The invention also provides a system for evacuating hydrogen from multiple high pressure storage tanks on a vehicle for the purpose of maximizing well to tank energy efficiency.

The invention decreases the energy lost to compression of the hydrogen, which results in a higher well to tank efficiency, thus providing a benefit to the environment, to the station provider, and to the vehicle owner. In addition, the invention increases the amount of utilizable hydrogen at a hydrogen station with limited storage capacity. In the invention, the pressure in the vehicle tank(s) is minimized, allowing the hydrogen in the lower pressure banks at the hydrogen station to be used, resulting in better utilization of the limited hydrogen stored at the station.

The invention is described more fully in the following description of the preferred embodiment considered in view of the drawings in which:

BRIEF DESCRIPTION OF THE SEVERAL VIEWS OF THE DRAWINGS

Figure 1 shows a prior art hydrogen fuel tank system.

Figure 2A shows a hydrogen fuel tank system configured in accordance with the system of the invention.

Figure 2B shows the hydrogen tank valves operatively interconnected with a control means for regulating hydrogen flow to and from valved tanks and, in an alternative or supplemental configuration, a inlet manifold and an outlet manifold having controllable valves interconnected with the tank inlets and outlets and leading to and from the vehicle fuel cell.

Figure 3A and Figure 3B, respectively, show before and after comparisons of the utilization of on board hydrogen gas fuel, measured by individual tank pressure, respectively, in vehicle "A" using a prior art system and vehicle "B" using the system of the invention. Full fill and 50% utilization are shown as examples.

Figure 4 is flow diagram of an example of the logic control of the system of the invention.

Figure 5 illustrates comparisons of the utilization of hydrogen gas fuel, measured by the pressure in separate hydrogen refueling station tanks in the instance when vehicle "A" using a prior art system and vehicle "B" using the system of the invention are refueled in a sequence of successive fillings.

Figure 6 is a chart comparing the on board vehicle hydrogen storage tank pressures measured by percent full of all tanks (*i.e.,* vehicle total fuel capacity) after successive refills using the system of the invention 'B" with successive refills using the prior art '"A".

Figure 7A is a comparison of the calculated "ideal" compression energy required to fill each station bank directly to full after two vehicle fills. Figure 7B charts an example of the calculated total compression energy required for filling all the storage tanks at the station and for filling both vehicle tanks directly, based on two successive fills for a vehicle with two tanks.

DETAILED DESCRIPTION OF THE INVENTION

The system of the invention increases the refueling energy efficiency of hydrogen powered vehicles by withdrawing hydrogen from one tank, in the bank of multiple on board storage tanks, at a time; until a cut off or threshold minimum pressure is reached. When the threshold cut off pressure is reached in a tank in use, the next tank in sequence is opened to allow gas flow from the next tank to the fuel cell or engine. This process is repeated for all tanks on the vehicle. In the overall vehicle / refueling station system, when the vehicle is refueled with hydrogen, less compression energy is required to refill the tanks. The invention increases the total energy efficiency from well to tank and increases hydrogen station gas utilization by utilizing more efficiently the limited quantity of hydrogen at the filling station and by reducing the energy required to compress the hydrogen at the station (or to the vehicle directly) back to a full state after refueling. The invention conserves the high pressure hydrogen at the station, and, in effect, maximizes the hydrogen utilization on the station side. More vehicles can be filled at a station using the invention because more of the low pressure hydrogen at the station is used in filling the vehicle tanks, preserving the higher pressure hydrogen, and increasing the capability for overall utilization of the limited supply of hydrogen at the station.

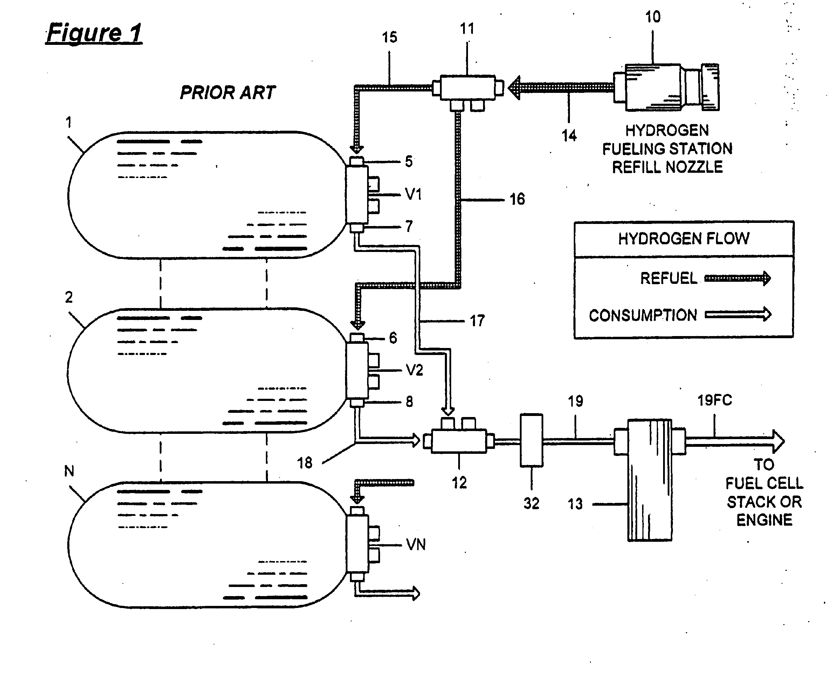

Figure 1 illustrates an example of a prior art hydrogen storage tank system for motor vehicles. A first tank 1 includes valve V1 with check valve inlet 5 and switchable outlet 7. A second tank 2 includes valve V2 with check valve inlet 6 and switchable outlet 8. Second, third and other tanks N and valves VN are similarly configured in parallel. Tank 1 and tank 2 are interconnected in parallel through conduits emanating from refueling joint or manifold 11 and gas utilization joint or manifold 12. Refueling joint or manifold 11 is interconnectable with refueling nozzle 10 through conduit 14. Gas utilization joint or manifold 12 is interconnected to on board tanks 1 and 2 through conduits 17 and 18 which lead through conduit 19 through high pressure regulator 32 and low pressure regulator 13 to the vehicle fuel cell stack or engine 19FC. Typically the vehicle tanks are cylindrical with hemispherical ends and are capable of storing a charge of hydrogen gas at an approximately 34.47 MPa (5000 psi) maximum rated capacity at a defined temperature. In the refuel mode through conduits 15 and 16 and in the consumption mode through conduits 17 and 18, an equal pressure or quantity of hydrogen gas is respectively input into and evacuated from each parallel tank. When the vehicle is started, before the fuel cell or engine can begin generating power, the outlet 7 on tank 1 and outlet 8 on tank 2 in the valves V1 and V2 open to allow hydrogen to flow. Normally, all the outlet valves on the on board tanks leading to the fuel cell stack or vehicle engine are opened simultaneously, allowing each tank to contribute hydrogen to the vehicle equally. As the hydrogen is consumed, pressure drops equally in all tanks on board the vehicle.

In contrast, the system of the invention, in one example, opens the outlet valve on one fuel tank at a time, allowing the hydrogen from a single tank to flow to the fuel cell stack until the tank's pressure reaches a minimum threshold or cut off pressure, at which time, the outlet valve on a next tank in sequence is opened, and the outlet valve from the tank then in use is closed, whereupon hydrogen from the full (next) tank flows to the fuel cell stack. The sequence is repeated until all of the hydrogen in all of the tanks is evacuated to the cut off or operability threshold level, or until the vehicle tanks are refueled.

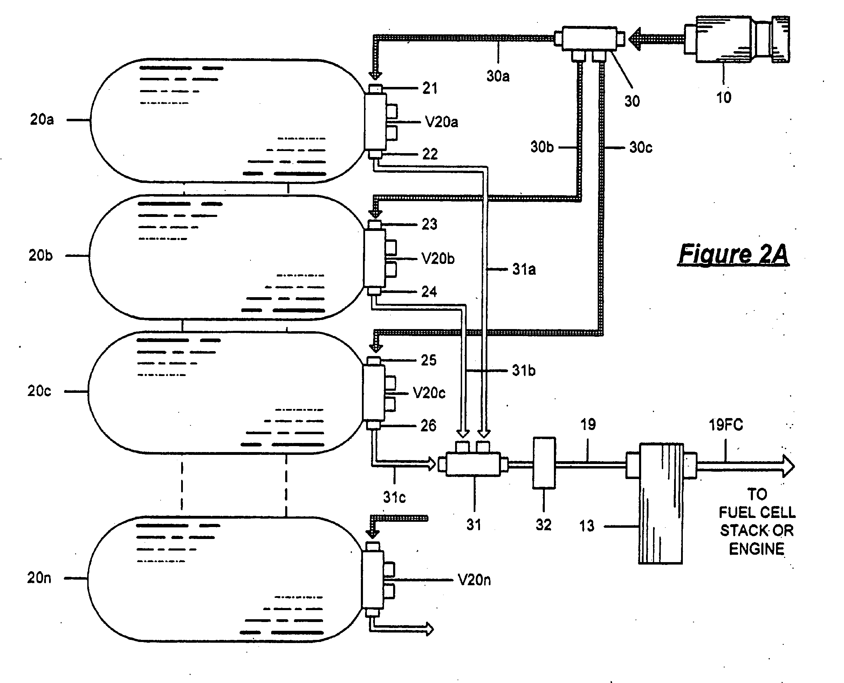

Figure 2A illustrates a motor vehicle hydrogen storage tank system of the invention in which tanks 20a, 20b, 20c ... 20n are capable of sequential interconnection and control allowing hydrogen evacuation and fill to proceed in a controlled sequence dependent upon individual tank pressure. The tanks 20a, 20b, 20c ... 20n respectively include valves V20a, V20b, V20c ... V20n each respectively including controllable inlet, 21, 23, 25, ... for refilling, and controllable outlet 22, 24, 26, ... for use when gas is required for the fuel cell or engine. In the refueling mode, joint or manifold 30 interconnects with refueling nozzle 10, interconnectable with the fuel supply at the refilling station, and allows gas flow in conduits 30a, 30b and 30c through valves 21, 23 and 25 to sequentially refill tanks 20a, 20b, 20c ... 20n. In the operating mode, when valves 21, 23 and 25 are closed, tanks 20a, 20b, 20c ... 20n are sequentially evacuated when valves 22, 24, 26, ... are respectively switched open to allow gas flow sequentially in conduits 31 a, 31 b and 31 c to, in an example with a fuel cell stack, through conduit 19 to first pressure regulator 32 (reducing pressure from about the 34 47 MPa (5000 psi) maximum, and lower as the gas is consumed, to about a consistent 0.6895 MPa (100psi) level) and second pressure regulator 13 (reducing and maintaining pressure from about 0.6895 MPa (100psi) to about 0.2068 MPa (30psi)) and ultimately to fuel cell stack 19FC at a suitable predetermined operating pressure. In a design example for a fuel cell stack on a vehicle, the minimum remaining tank (or cut off or operating threshold minimum) pressure is about 150 psi, at which pressure, the controllable outlet valve associated with the tank closes. Preferably, before the outlet valve in the tank closes, the outlet valve in the next succeeding tank is opened so that the supply of hydrogen to the fuel cell is uninterrupted. As referred to in the application, except for automatic check valves, valves controllable otherwise in the system may be operated by a solenoid or other actuator means.

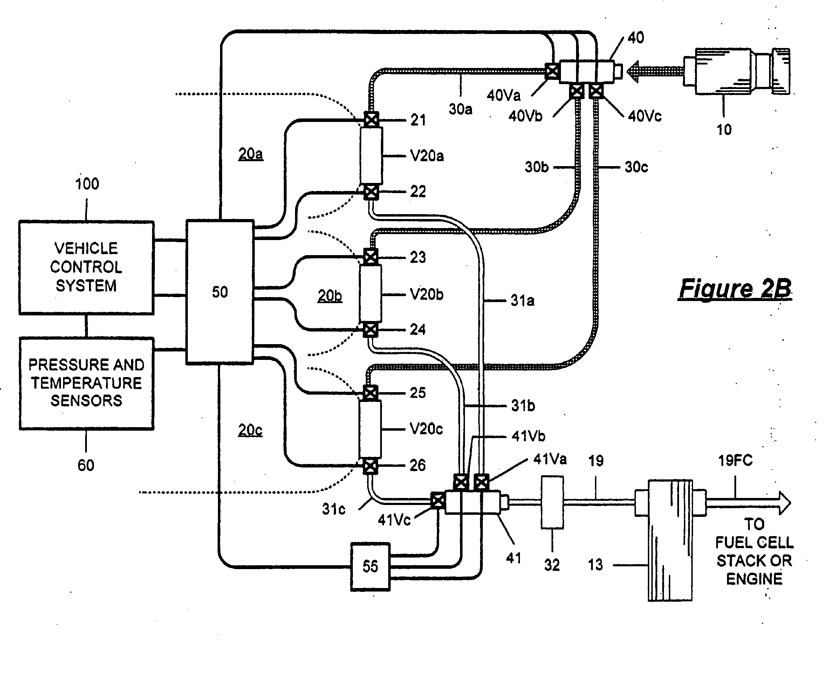

As shown in the example of Figure 2B, selectable or controllable inlet valves 21, 23 and 25 and selectable or controllable outlet valves 22, 24 and 26 on each tank 20a, 20b and 20c may be operatively interconnected with a control means, logic circuit, or CPU 50 and the vehicle control system 100 and a pressure and/or temperature or other sensing means associated with the tanks or their inlet and outlet lines. As an alternative or supplemental control system, manifolds 40 and 41, respectively located between the tanks and the refill line and the hydrogen fuel cell stack or engine may have a plurality of controllable valves. In the inlet manifold 40 leading from the refill line, the controllable valves include valves 40Va, 40Vb and 40Vc associated with each tank inlet. The outlet manifold includes controllable valves 41Va, 41Vb and 41VC, each connected to the outlet of an associated tank. The manifold valves may be controlled by means 50 to allow hydrogen flow to or from a selected tank from the refill line or to the fuel cell or engine until a cut off or threshold pressure or temperature or other parameter, as appropriate in a particular instance, in the selected tank or line is reached. As shown, outlet manifold 41 may include a plurality of selectable or controllable valves 41Va, 41Vb and 41Vc interconnected with the outlets 22, 24 and 26 of the vehicle tanks 20a, 20b and 20c, controlled by a separate manifold valve switching means 55, interconnected with means 50. Specific control configurations and parameters, and valve locations and systems in accordance with the principles of the invention are preferably based on overall vehicle design considerations. For example, tank valves may not be required to the extent that a manifold valve system is sufficient or both tank and manifold valves may be included. In another example, pressure, temperature and other sensors 51 may be provided to monitor tank and/or line pressures and temperatures or other parameters, and the measure of the pressure and temperature or other parameter sensed may be input into an appropriate control means as a determinant associated with the operating protocol of the tank or manifold valve system for refilling and consumption of pressurized hydrogen fuel in the course of vehicle operation in accordance with the principles of the invention.

Where a hydrogen powered vehicle has multiple pressurized on board storage tanks for hydrogen gas, the system reduces the compression energy required to refill the vehicle tanks. Each tank on the vehicle has an inlet valve connectable to the refilling line through a manifold, and an inlet valve allows pressurized hydrogen from the refilling line to flow into one or more on board tank until the pressure in the one or more on board tank reaches a predetermined level; and when the pressure in the one or more tank reaches a predetermined level, hydrogen from the refilling line flows to the one or more next on board tank until the pressure in the next one or more tank reaches a predetermined level. This sequence is repeated for all tanks on the vehicle until all tanks are filled.

In examples, the predetermined level of the pressure in the tank may essentially correspond to the available maximum pressure in the refill line. The inlet valve of each on board tank may be a pressure sensitive check valve that prevents backflow when the pressure in the tank equals the pressure in the refill line, wherein the tanks are filled in order from the lowest pressure to the highest pressure until the pressure in the tanks equals the pressure in the refill line. Likewise, a controllable solenoid valve operated by a suitable control means may control the refilling.

In an example of a refilling process where the tank inlets are configured with controlled valves, the closing of the inlet valve on a first tank may selectively occur before, simultaneously with, or after the opening of an inlet valve on a next tank. Pressure sensors in each tank or valve or line may be operably interconnected with a control mechanism that opens and closes the valves and the control mechanism may comprise an on board programmable logic circuit, an on board CPU, or comparable means. Where a vehide has three or more tanks, the inlets of two or more tanks may be paired together in parallel and controlled as one.

In refilling vehicle tanks, the invention provides a system for reducing the compression energy required to refill more than one on board tank. In an example where tank inlets are configured with check valves which close automatically to prevent backflow and the refilling line simultaneously connects to the inlet to each tank, a tank check valve allows hydrogen to flow into a first on board tank with the lowest pressure. Since the multiple on-board tanks will be at different pressure levels when the refilling process begins, hydrogen gas will naturally flow to the tank with the lowest pressure first, until it reaches the pressure of the next highest tank, where upon the hydrogen gas will commence flowing into both the first tank and the second tank simultaneously. This process will continue to progress until the tank pressures reach the maximum pressure available from the refilling line. If the available refilling line pressure is greater than the pressure in all of the on-board tanks, then before the refilling process ends, hydrogen will be flowing simultaneously into all of the on-board tanks until the rated tank capacity is reached or the available refilling line pressure is reached. Thus, when the vehicle is refueled, the hydrogen naturally flows to the lowest pressure tank first, utilizing the low pressure storage at the station. Nothing special needs to be done for this fill sequence to occur; the multiple tanks on the vehicle naturally fill in the order of first, the lowest pressure tank, repeating the process, and concluding with all tanks with pressures less than the available refilling line pressure filling simultaneously.

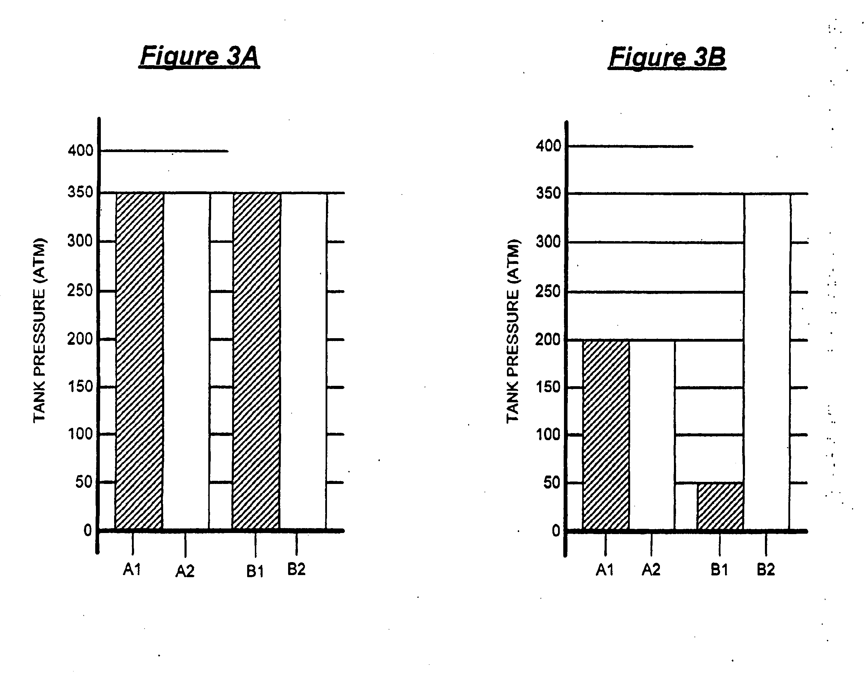

Figure 3A and Figure 3B, respectively, show before and after comparisons of the utilization of pressurized on board hydrogen gas fuel in two vehicles, each having two tanks, measured by tank pressure, respectively, in vehicle "A" using a prior art system and vehicle "B" using the system of the invention. Both vehicles start with a full fill; a comparison is made after driving 50% of the vehicle fuel capacity. Figure 3A and Figure 3B illustrate the advantage achieved by use of the invention "B" in comparison with the prior art "A" using a vehicle with two fuel tanks as an example. As shown in Figure 3A, both vehicles begin with a 100% fill. In the prior art example, when fuel is consumed, the outlet valves on both tanks are open at the same time; in the example illustrating the invention, when fuel is consumed, the outlet valve on only one tank is open and the tank is evacuated until the pressure threshold minimum is reached. Figure 3B shows pressure in the tanks of both vehicles after driving half of the vehicle range determined by fuel capacity in a situation where overall fuel consumption in each vehicle is the same 50%, colloquially, leaving the overall vehicle fuel supply either half full or half empty. The tanks A1 and A2 in vehicle A are at 50% each, whereas the tanks B1 and B2 in vehide B are respectively exhausted, namely, the low pressure operability threshold is reached, (B1), and at full capacity, 100% (B2). When both valves on both tanks are open at the same time, pressure and gas utilization in each tank is the same. Applying the invention, the scenario shown in Figure 3B illustrates that when valves on the separate tanks are open in a one tank at a time sequence, tank pressure and gas utilization occurs in a first tank until pressure in the tank reaches the operability threshold and the other tank remains fully charged.

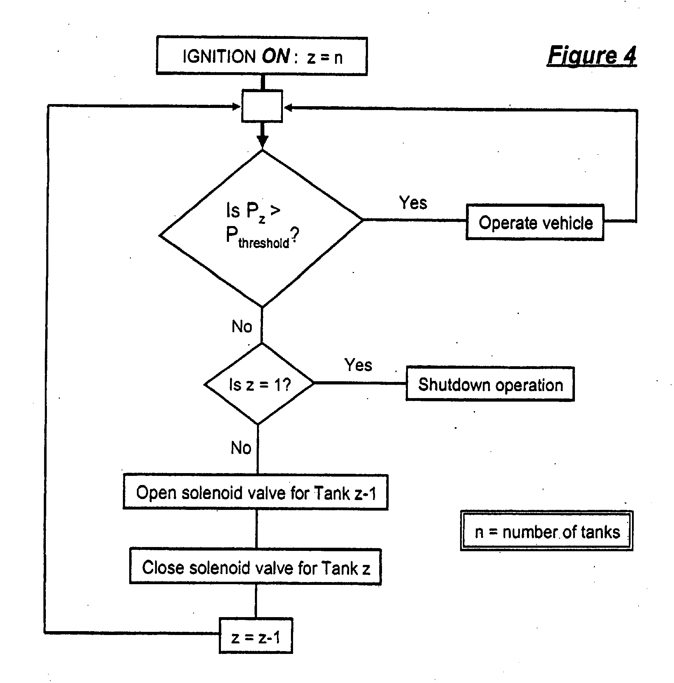

Figure 4 shows an example of the operating logic of the system of the invention where "n" represents the number of on board tanks (two (2) or greater) and "z" represents the number of a tank in sequence overall in the on board system. Hydrogen is evacuated from tank "z" until the threshold operating minimum (or other selected, predetermined, measured, check valve, controlled, or cut off) pressure is reached. Upon this threshold, the valve for tank "z-1" is opened and the solenoid valve for tank "z" is shut down, *i.e.,* the outlet valve is dosed. Successive tanks in the on board hydrogen bank are evacuated using the same protocol. Alternative configurations, timing sequences, pressure thresholds, and valve control means utilized in the evacuation of the tanks may be adapted from comparable alternatives described above with respect to the filling system and illustrated in part in Figure 2B. In Figure 2B, a controller based upon a logic circuit or CPU is shown at 40 and a valve controlled manifold is shown at 41. Manifold 41 may have intrinsic pressure control means or may be controlled by unit 40. In Figure 2B, the controllable manifold 41 for selecting tank flow based on pressure parameters is shown wherein valves or switches 41Va and 41Vb associated with tanks 20a and 20b are dosed and the valve or switch 41Vc associated with tank 20c is open.

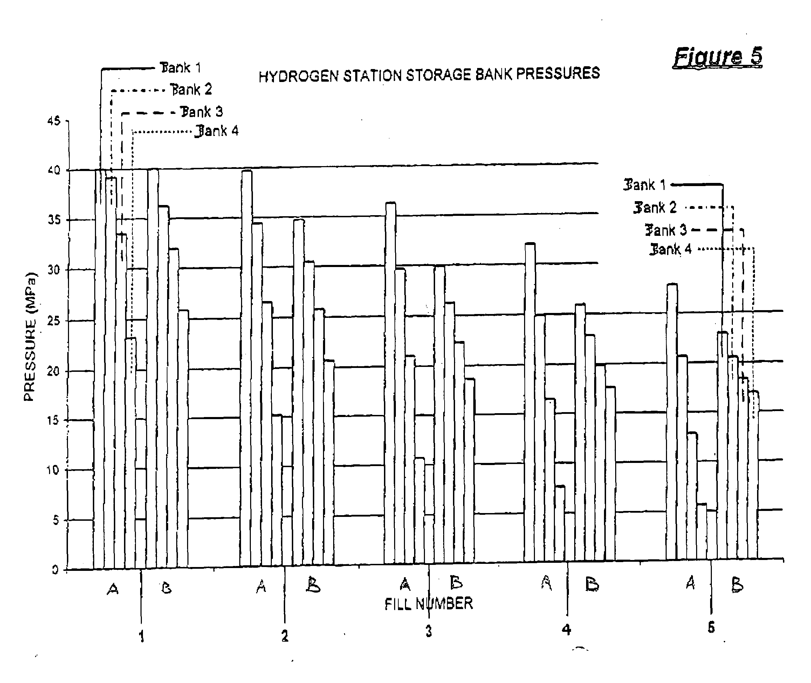

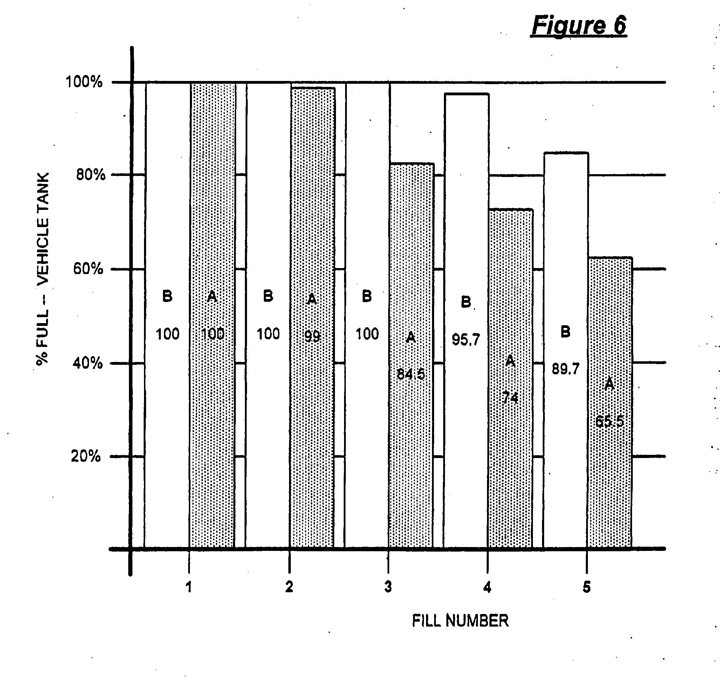

The invention achieves further benefits in utilizing the limited quantity of hydrogen at a filling station. In the comparison chart shown in Figure 5, two scenarios involving five vehicles were evaluated: (A) five conventional vehicles are refueled consecutively (or the same vehicle is refilled five times, or any other combination of vehicles and fills equaling five) at a hydrogen station; and (B) five vehicles utilizing the invention method are refueled consecutively at a hydrogen station. The number of banks at the station is four (Bank 1, Bank 2, Bank 3, Bank 4) with a volume of each bank of 200 liters. On the vehicle side, the number of tanks per vehicle is two and the volume of each tank is 100 liters. After successive refills, the pressure in Bank 4 at the station (B) refilling vehicles using the system of the invention is consistently higher. Vehicle fill percentage (% of total fuel capacity) is shown in Figure 6; the station can fill three vehicles (or provide three refills) using the invention "B" to 100% full, but can fill only one conventional vehicle "A" to 100% full. In fill numbers four and five, the invention achieves a substantial advantage in fill quantity, 95.7% vs. 74% for the conventional system in fill four and 89.7% vs. 65.5% for the conventional system in fill five. Bank 4 pressure is consistently higher utilizing the invention.

A further benefit in utilizing the invention is achieved in terms of the energy required to compress the hydrogen at the station (or to the vehicle directly) back to a full state after refueling. Using as an example, a vehicle with two tanks and two fills, the energy required to compress the hydrogen back to a full state for the station and the vehicle was calculated and compared for prior art scenario A and invention scenario B. The energy required for compression after two fills was calculated for each scenario in accordance with the formula for "ideal" compression energy:

$$E = \frac{V}{cP_s^c}\left(P_f^{c+1} - P_i^{c+1}\right) - \frac{V}{c}\left(P_f - P_i\right)$$

where

> $E$ = Ideal Compression Energy
> $V$ = Volume of Storage Tank
> $P_f$ = Compressor Outlet pressure
> $P_i$ = Compressor Inlet pressure
>
> $$c = \frac{k-1}{zk}$$
>
> $z$ = Number of Compression Stages
> $k = C_p/C_v$
> $C_p$ = Molar heat at const pressure
> $C_v$ = Molar heat at const volume

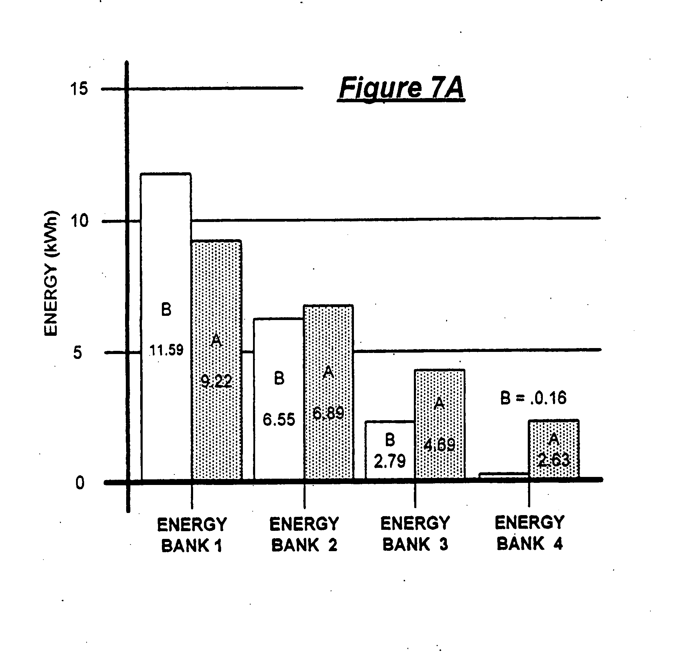

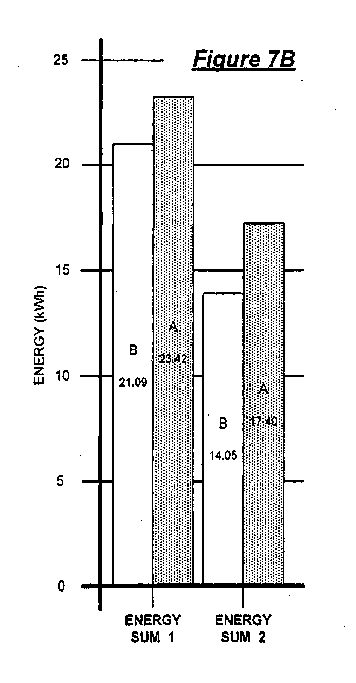

The energy required for compression, either into the station banks, or directly into the vehicle tank, after two fills was calculated for each scenario assuming an ideal gas, four compression stages, no losses due to blow by, friction, etc. Figure 7A and Figure 7B are charts, respectively comparing calculations of "ideal" compression energy required to fill all station banks and all vehicle tanks directly to full after two vehicle fills. In the instances indicated in Figure 7A and in energy sum 1 in Figure 7B, the compressor compresses hydrogen into the station storage banks. Energy sum 2 in Figure 7B represents the example of a slow, overnight fill where the station compresses the hydrogen directly into the vehicle tank. In all instances, the energy requirement necessary to refill multiple tanks of the system of the invention "B" is less than the energy requirement necessary to refill multiple tanks of the prior art "A"

**Claims**

1. Apparatus comprising a plurality of tank units (20a-20c) for the on board storage of hydrogen gas under high pressure in a vehicle:

   > each tank unit comprising a valve (V20a-V20c) having an outlet responsive to a control means (50),
   > pressure sensors (60) sensitive to each tank unit pressure to generate a pressure signal,
   > said control means (50) adapted to respond to a vehicle operation signal and said pressure signal to control the sequence of exhausting of the hydrogen gas from each tank unit (20a-20c) by opening the outlet of one of the valves (V20a-V20c), at a time, to exhaust hydrogen gas from one selected tank unit at a time, to power the vehicle, until the tank unit is evacuated to a threshold pressure,
said control means (50) adapted to respond to said pressure signal representing a threshold pressure to open the outlet of one of the valves (V20a-V20c) of one tank unit (20a-20c) above the threshold pressure,
each tank unit (20a-20c) connected to an inlet manifold (40) and valves (40Va-40Vc) responsive to connection of a refilling line (10) to the inlet manifold (40) to flow hydrogen gas from the inlet manifold (40) into one or more of said tank units (20a-20c) which are at least partially exhausted, **characterized in that** said control means (50) is adapted to respond to said pressure sensors (60) sensing the pressure in said tank units (20a-20c) in each at least partially exhausted tank to control the valves to flow the hydrogen gas first to fill each most exhausted tank unit (20a-20c) until the pressure in said most exhausted tank unit (20a-20c) reaches a final pressure equal to the maximum supply pressure available from the refilling line, or a maximum tank unit storage pressure, and responsive to a tank unit pressure signal indicating the presence of another at least partially exhausted tank unit to then control the valves to direct the flow of hydrogen gas to fill the next most exhausted tank unit until every at least partially exhausted tank unit (20a-20c) is filled to the final pressure.

2. Apparatus according to claim 1 wherein the valves (V20a-V20c) are interposed between the tank inlet and the inlet of the inlet manifold (30).

3. Apparatus according to any one of the preceding claim wherein the inlet of each valve (V20a-V20c) is opened and closed in response to the control means (50).

4. Apparatus according to any one of the preceding claims wherein inlet valves of each on board tank are pressure sensitive check valves.

5. Apparatus according to any one of the preceding claims wherein the control means is responsive to temperature sensors (60) sensitive to the temperature in each tank (20a-20c).

6. Apparatus according to any one of the preceding claims wherein any one or more of the tank units (20a-20c) comprises two or more tanks connected to act as a single tank.

7. Apparatus according to any one of the preceding claims wherein the control means (50) is a logic circuit.

8. Apparatus according to any one of the preceding claims wherein the outlet valves are operated by an actuator responsive to the control means (50).

9. Apparatus according to any one of the preceding claims wherein the control means is adapted to control the valve outlet of each tank unit (20a-20c) to close the valve outlet of the tank unit at the threshold pressure simultaneously with the opening of the valve outlet on the next tank unit (20a-20c) above the threshold pressure.

10. Apparatus according to any one of claims 1 to 8 wherein the control means is adapted to control the valve outlet of each tank unit (20a-20c) to close the valve outlet of the tank unit at the threshold pressure after the opening of the valve outlet on the next tank unit (20a-20c) above the threshold pressure.

11. Apparatus according to any one of the preceding claims wherein the outlets of each tank unit (20a-20c) communicate with an outlet manifold (41), said outlet manifold having switchable inlet valves (41Va-41 Vb) associated one each with each tank outlet, to valve the outflow of hydrogen gas from each tank unit (20a-20c).

12. Vehicle comprising the apparatus according to any one of the preceding claims.

13. Vehicle according to claim 12 wherein the vehicle has a hydrogen cell stack in fluid communication with the tank units (20a-20c) whereby hydrogen gas from the tank units can be delivered to the hydrogen cell stack.

14. Vehicle according to claim 12 wherein the logic circuit is included in a CPU on board the vehicle.

15. A method of exhausting and refilling a hydrogen gas tank system in a vehicle, said system comprising a plurality of tank units (20a-20c) for the on board storage of hydrogen gas under high pressure comprising a process of exhausting the tank units and a process of refilling the tank units:

(A) the process of exhausting said tank units comprising the steps of:

valving an outlet of each tank unit (20a-20c) to exhaust only one tank unit (20a-20c) at a time,

sensing the pressure of hydrogen gas in the exhausting tank unit (20a-20c) to sense when the exhausting gas tank unit pressure falls to a threshold pressure,

valving the outlet of a charged tank unit (20a-20c) at a pressure sensed above the threshold pressure to exhaust, and

(B) the process of refilling said hydrogen tank system to a final pressure comprising the steps of:

(i) connecting an inlet line (10) of a filling station to an inlet manifold (30) of the hydrogen tank system,

(ii) sensing the tank unit pressures to control the flow of hydrogen gas from the inlet manifold (30) to each most exhausted tank unit (20a-20c) to fill said most exhausted tank units until the pressure sensed therein reaches a final pressure equal to the maximum supply pressure or the maximum tank unit storage pressure,

(iii) sensing the tank unit pressure to detect any next most exhausted tank units and directing the flow of hydrogen gas to refill the next most exhausted tank units to the final pressure,

(iv) repeating step (iii) until all the tank units are filled to the final pressure.

16. A method according to claim 15 comprising the step of, during the process of exhausting the tank units (20a-20c), closing the outlet of a tank unit (20a-20c) at the threshold pressure after opening the outlet of a tank unit (20a-20c) above the threshold pressure.

17. A method according to claim 15 comprising the step of, during the process of exhausting the tank units (20a-20c), closing the outlet of a tank unit (20a-20c) at the threshold pressure simultaneously with the opening of the outlet of a tank unit (20a-20c) above the threshold pressure.

18. Apparatus comprising a plurality of tank units (20a-20c) for the on board storage of hydrogen gas under high pressure in a vehicle:

each tank unit comprising a valve (V20a-V20c) having an outlet responsive to a control means (50),

pressure sensors (60) sensitive to each tank unit pressure to generate a pressure signal,

said control means (50) adapted to respond to a vehicle operation signal and said pressure signal to control the sequence of evacuation of the hydrogen gas from each tank unit (20a-20c) by opening the outlet of one of the valves (V20a-V20c), at a time, to exhaust hydrogen gas from one selected tank unit at a time, to power the vehicle, until the tank unit is evacuated to a threshold pressure,

said control means (50) adapted to respond to said pressure signal representing a threshold pressure to open the outlet of one of the valves (V20a-V20c) of one tank unit (20a-20c) above the threshold pressure,

each tank unit (20a-20c) connected to an inlet manifold (40) and valves (40Va-40Vc) responsive to connection of a refilling line (10) to the inlet manifold (40) to flow hydrogen gas from the inlet manifold (40) into one or more of said tank units (20a-20c) which are at least partially exhausted, **characterized in that**

in a condition where one tank unit (20a-20c) is partially exhausted to an intermediate pressure between the threshold pressure and the maximum tank unit storage pressure, said valves (V20a-V20c) are responsive to:

> any refilling tank units (20a-20c) reaching said intermediate pressure, to flow simultaneously hydrogen gas into said partially exhausted tank unit (20a-20c),
> or
> in the absence of tank units at the threshold pressure, to flow hydrogen gas to said tank unit at said intermediate pressure,

until the pressure in every tank unit exhausted, or partially exhausted, reaches a final pressure equal to the lesser of the maximum supply pressure available from the refilling line, or a maximum tank unit storage pressure.

19. Apparatus according to claim 18 wherein the valves (V20a-V20c) are interposed between the tank inlet and the inlet of the inlet manifold (40).

20. Apparatus according to claim 18 or 19 wherein the valves (V20a-V20c) responsive to connection of a refilling line (10) are pressure sensitive check valves.

21. Apparatus according to any one of claims 18 to 20 wherein a temperature sensor is provided to measure the temperature in each tank unit (20a-20c) and said control means controls the valves (V20a-V20c) in response to the temperature sensor.

22. Apparatus according to any one of claims 18 to 21 wherein any one or more of the tank units (20a-20c) comprises two or more tanks connected to act as a single tank.

23. Apparatus according to any one of claims 18 to 22 wherein the control means (50) is a logic circuit.

24. Apparatus according to any one of claims 18 to 23 wherein the valve outlets are operated by an actuator responsive to the control means (50).

25. Apparatus according to any one claims 18 to 24 wherein the control means is adapted to control the valve outlet of each tank unit (20a-20c) to close the valve outlet of the tank unit at the threshold pressure simultaneously with the opening of the valve outlet on the next tank unit (20a-20c) above the threshold pressure.

26. Apparatus according to any one of claims 18 to 25 wherein the control means is adapted to control the valve outlet of each tank unit (20a-20c) to close the valve outlet of the tank unit at the threshold pressure after the opening of the valve outlet on the next tank unit (20a-20c) above the threshold pressure.

27. Apparatus according to any one claims 18 to 26 wherein the outlets of each tank unit (20a-20c) communicate with an outlet manifold (41), said outlet manifold having switchable inlet valves (41Va-41Vb) associated one each with each tank outlet, to valve the outflow of hydrogen gas from each tank unit (20a-20c).

28. Vehicle comprising the apparatus according to any one of claims 18 to 26.

29. Vehicle according to claim 28 wherein the vehicle has a hydrogen cell stack in fluid communication with the tank units (20a-20c) whereby hydrogen gas from the tank units can be delivered to the hydrogen cell stack.

30. Vehicle according to claim 29 wherein the logic circuit is included in a CPU on board the vehicle.

31. A method of exhausting and refilling a hydrogen gas tank system in a vehicle, said system comprising a plurality of tank units (20a-20c) for the on board storage of hydrogen gas under high pressure comprising: a process of exhausting the tank units; and a process of refilling the tank units:

> (A) the process of exhausting said system comprising the steps of:
>
> > controlling the valving of an outlet of each tank unit (20a-20c) to exhaust only one tank unit (20a-20c) at a time,
> > sensing the pressure of hydrogen gas in the exhausting tank unit (20a-20c) to sense when the exhausting gas tank unit pressure falls to a threshold pressure,
> > valving the outlet of a charged tank unit (20a-20c) at a pressure sensed above the threshold pressure to exhaust, and

(B) the process of refilling said hydrogen gas tank system to a final pressure comprising the steps of:

connecting an inlet line (10) of a filling station to an inlet manifold (40) of the hydrogen tank system to flow hydrogen gas from the inlet line (10) into any of the tank units (20a-20c) at the threshold pressure, and in a condition where one tank unit (20a-20c) is exhausted to an intermediate pressure between the threshold pressure and final pressure:

when any refilling tank units reach said intermediate pressure, valving the inlet of said tankt units (20a-20c) to simultaneoulsy flow hydrogen gas into said tank units (20a-20c) at the intermediate pressure and,
in the absence of any refilling tank units of the threshold pressure, valving the flow of hydrogen gas directly to said intermediate pressure tank, until the pressure in every tank unit reaches a final pressure equal to one of the maximum supply pressure available from the refilling line, or a maximum tank unit storage pressure.

32. A method according to claim 31 comprising the step of, during the process of exhausting the tank units (20a-20c), closing the outlet of a tank unit (20a-20c) at the threshold pressure after opening the outlet of a tank unit (20a-20c) above the threshold pressure.

33. A method according to claim 32 comprising the step of, during the process of exhausting the tank units (20a-20c), closing the outlet of a tank unit (20a-20c) at the threshold pressure simultaneously with the opening of the outlet of a tank unit (20a-20c) above the threshold pressure.

**Patentansprüche**

1. Vorrichtung mit mehreren Tankeinheiten (20a-20c) zur Hochdruckspeicherung von gasförmigem Wasserstoff an Bord eines Fahrzeugs, wobei jede Tankeinheit ein Ventil (V20a-V20c) mit einem auf eine Steuereinrichtung (50) ansprechenden Auslass aufweist, mit auf den Druck jeder Tankeinheit ansprechenden Druckfühlern (60) zur Zeugung eines Drucksignals, wobei die Steuereinrichtung (50) so ausgelegt ist, das sie in Abhängigkeit von einem Fahrzeugbetriebssignal und dem Drucksignal die Reihenfolge der Wasserstoffentleerung aus den einzelnen Tankeinheiten (20a-20c) steuert, indem sie den Auslass jeweils nur eines der Ventile (V20a-V20c) gleichzeitig öffnet, um zum Antrieb des Fahrzeugs Wasserstoff aus nur jeweils einem gewählten Tank gleichzeitig zu entnehmen, bis die Tankeinheit auf einen Schwellendruck entleert ist,
wobei die Steuereinrichtung (50) so ausgelegt ist, das sie in Abhängigkeit von dem einen Schwellendruck angebenden Drucksignal den Auslass eines der Ventile (V20a-V20c) einer Tankeinheit (20a-20c) oberhalb des Schwellendrucks öffnet, und
wobei jede Tankeinheit (20a-20c) mit einem Einlassstutzen (40) und Ventilen (40Va-40Vc) verbunden ist, die auf den Anschluss einer Nachfüllleitung (10) an den Ansaugstutzen (40) ansprechen, um Wasserstoff von dem Einlassstutzen (40) in ein oder mehrere der Tankeinheiten (20a-20c), die mindestens teilentleert sind, strömen zu lassen,
**dadurch gekennzeichnet, dass** die Steuereinrichtung (50) so ausgelegt ist, dass sie in Abhängigkeit von den den Druck in den Tankeinheiten (20a-20c) in jedem mindestens teilentleerten Tank messenden Druckfühlern (60) die Ventile öffnet, so dass der Wasserstoff derart strömt, dass er zunächst die am stärksten entleerte Tankeinheit (20a-20c) füllt, bis der Druck in dieser am stärksten entleerten Tankeinheit (20a-20c) einen Enddruck gleich dem maximalen von der Nachfüllleitung zur Verfügung gestellten Versorgungsdruck oder einen maximalen Speicherdruck der Tankeinheit erreicht, sowie in Abhängigkeit von einem das Vorhandensein eines weiteren mindestens teilentleerten Tanks angebenden Tankeinheit-Drucksignal die Ventile dann so steuert, dass sie die Wasserstoffströmung derart richten, dass die am nächststärksten entleerte Tankeinheit gefüllt wird, bis jede mindestens teilentleerte Tankeinheit (20a-20c) auf den Enddruck gefüllt ist.

2. Vorrichtung nach Anspruch 1, wobei die Ventile (V20a-V20c) zwischen dem Tankeinlass und dem Einlass des Ansaugstutzens (30) liegen.

3. Vorrichtung nach Anspruch 1 oder 2, wobei der Einlass jedes Ventils (V20a-V20c) in Abhängigkeit von der Steuereinrichtung (50) geöffnet und geschlossen wird.

4. Vorrichtung nach einem der vorhergehenden Ansprüche, wobei Einlassventile jedes Bordtanks auf Druck ansprechende Rückschlagventile sind.

5. Vorrichtung nach einem der vorhergehenden Ansprüche, wobei die Steuereinrichtung auf die Temperatur in den einzelnen Tanks (20a-20c) messende Druckfühler (60) anspricht.

**6.** Vorrichtung nach einem der vorhergehenden Ansprüche, wobei ein oder mehrere der Tankeinheiten (20a-20c) zwei oder mehrere Tanks aufweisen, die so verbunden sind, dass sie als einzelner Tank wirken.

**7.** Vorrichtung nach einem der vorhergehenden Ansprüche, wobei die Steuereinrichtung (50) eine Logikschaltung ist.

**8.** Vorrichtung nach einem der vorhergehenden Ansprüche, wobei die Auslassventile von einem auf die Steuereinrichtung (50) ansprechenden Stellorgan betätigt sind.

**9.** Vorrichtung nach einem der vorhergehenden Ansprüche, wobei die Steuereinrichtung so ausgelegt ist, das sie den Ventilauslass jeder Tankeinheit (20a-20c) derart steuert, dass sie den Ventilauslass der Tankeinheit bei dem Schwellendruck gleichzeitig mit dem Öffnen des Ventilauslasses der nächsten Tankeinheit (20a-20c) oberhalb des Schwellendrucks schließt.

**10.** Vorrichtung nach einem der Ansprüche 1 bis 8, wobei die Steuereinheit so ausgelegt ist, dass sie den Ventilauslass jeder Tankeinheit (20a-20c) derart steuert, dass sie den Ventilauslass der Tankeinheit bei dem Schwellendruck nach dem Öffnen des Ventilauslasses der nächsten Tankeinheit (20a-20c) über dem Schwellendruck schließt.

**11.** Vorrichtung nach einem der vorhergehenden Ansprüche, wobei die Auslässe der einzelnen Tankeinheiten (20a-20c) mit einem Auslassstutzen (41) verbunden sind, der den einzelnen Tankauslässen jeweils zugeordnete schaltbare Einlassventile (41Va-41Vb) aufweist, um das Ausströmen von gasförmigem Wasserstoff aus den einzelnen Tankeinheiten (20a-20c) ventilmäßig zu steuern.

**12.** Fahrzeug mit einer Vorrichtung nach einem der vorhergehenden Ansprüche.

**13.** Fahrzeug nach Anspruch 12 mit einem Wasserstoff-Zellenstapel in Strömungsverbindung mit den Tankeinheiten (20a-20c), wobei gasförmiger Wasserstoff aus den Tankeinheiten dem Wasserstoff-Zellenstapel zugeführt werden kann.

**14.** Fahrzeug nach Anspruch 12, wobei die Logikschaltung in einem an Bord des Fahrzeugs vorhandenen Prozessor enthalten ist.

**15.** Verfahren zum Entleeren und Nachfüllen eines Tanksystems für gasförmigen Wasserstoff in einem Fahrzeug, wobei das System mehrere Tankeinheiten (20a-20c) zur Hochdruckspeicherung von gasförmigem Wasserstoff an Bord aufweist, mit einem Vorgang zum Entleeren der Tankeinheiten und einem Vorgang zum Nachfüllen der Tankeinheiten,

(A) wobei in dem Vorgang zum Entleeren der Tankeinheiten:

ein Auslass jeder Tankeinheit (20a-20c) ventilmäßig so gesteuert wird, dass jeweils nur eine Tankeinheit (20a-20c) gleichzeitig entleert wird,
der Wasserstoffdruck in der Tankeinheit (20a-20c), die entleert wird, gemessen wird, um zu erfassen, wann der Druck in dieser Gastankeinheit auf einen Schwellendruck abnimmt, und
der Auslass einer gefüllten Tankeinheit (20a-20c) bei einem oberhalb des Schwellendrucks erfassten Druck ventilmäßig so gesteuert wird, dass er entleert wird, und

(B) wobei in dem Vorgang zum Nachfüllen des Wasserstofftanksystems auf einen Enddruck:

(i) eine Einlassleitung (10) einer Tankstelle mit einem Einlassstutzen (30) des Wasserstofftanksystems verbunden wird,
(ii) die Tankeinheit-Drücke gemessen werden, um die Wasserstoffströmung von dem Einlassstutzen (30) zu jeder am stärksten entleerten Tankeinheit (20a-20c) zu steuern und **dadurch** die am stärksten entleerten Tankeinheiten zu füllen, bis der darin gemessene Druck einen Enddruck gleich dem maximalen Versorgungsdruck oder dem maximalen Tankeinheit-Speicherdruck erreicht,
(iii) der Tankeinheit-Druck gemessen wird, um etwaige am nächststärksten entleerte Tankeinheiten festzustellen und die Wasserstoffströmung so zu richten, dass die am nächststärksten entleerten Tankeinheiten auf den Enddruck nachgefüllt werden, und
(iv) der Schritt (iii) wiederholt wird, bis die Tankeinheiten auf den Enddruck gefüllt sind.

**16.** Verfahren nach Anspruch 15, wobei während der Entleerung der Tankeinheiten (20a-20c) der Einlass einer Tankeinheit (20a-20c) bei dem Schwellendruck nach Cffnen des Auslasses einer Tankeinheit (20a-20c) über dem Schwellendruck geschlossen wird.

**17.** Verfahren nach Anspruch 15, wobei während der Entleerung der Tankeinheiten (20a-20c) der Auslass einer Tankeinheit (20a-20c) bei dem Schwellendruck gleichzeitig mit dem Cffnen des Auslasses einer Tankeinheit (20a-20c) über dem Schwellendruck geschlossen wird.

**18.** Vorrichtung mit mehreren Tankeinheiten (20a-20c) zur Hochdruckspeicherung von gasförmigem Wasserstoff an Bord eines Fahrzeugs,
wobei jede Tankeinheit ein Ventil (V20a-V20c) mit einem auf eine Steuereinrichtung (50) ansprechenden Auslass aufweist,
mit auf den Druck jeder Tankeinheit ansprechenden Druckfühlern (60) zur Zeugung eines Drucksignals,
wobei die Steuereinrichtung (50) so ausgelegt ist, das sie in Abhängigkeit von einem Fahrzeugbetriebssignal und dem Drucksignal die Reihenfolge der Wasserstoffentleerung aus den einzelnen Tankeinheiten (20a-20c) steuert, indem sie den Auslass jeweils nur eines der Ventile (V20a-V20c) gleichzeitig öffnet, um zum Antrieb des Fahrzeugs Wasserstoff aus nur jeweils einem gewählten Tank gleichzeitig zu entnehmen, bis die Tankeinheit auf einen Schwellendruck entleert ist,
wobei die Steuereinrichtung (50) so ausgelegt ist, das sie in Abhängigkeit von dem einen Schwellendruck angebenden Drucksignal den Auslass eines der Ventile (V20a-V20c) einer Tankeinheit (20a-20c) oberhalb des Schwellendrucks öffnet, und
wobei jede Tankeinheit (20a-20c) mit einem Einlassstutzen (40) und Ventilen (40Va-40Vc) verbunden ist, die auf den Anschluss einer Nachfüllleitung (10) an den Ansaugstutzen (40) ansprechen, um Wasserstoff von dem Einlassstutzen (40) in ein oder mehrere der Tankeinheiten (20a-20c), die mindestens teilentleert sind, strömen zu lassen,
**dadurch gekennzeichnet, dass** in einem Zustand, in dem eine Tankeinheit (20a-20c) auf einen zwischen dem Schwellendruck und dem maximalen Tankeinheit-Speicherdruck liegenden Zwischendruck teilentleert ist, die Ventile (V20a-V20c):
darauf ansprechen, dass Tankeinheiten (20a-20c), die nachgefüllt werden, den Zwischendruck erreichen, um gleichzeitig Wasserstoff in die teilentleerten Tankeinheiten (20a-20c) strömen zu lassen, oder,
wenn sich keine Tankeinheiten auf dem Schwellendruck befinden, Wasserstoff in die Tankeinheit bei dem Zwischendruck strömen zu lassen, bis der Druck in jeder vollständig oder teilweise entleerten Tankeinheit einen Enddruck erreicht, der gleich oder kleiner ist als der maximale von der Nachfüllleitung zur Verfügung gestellte Versorgungsdruck oder ein maximaler Tankeinheit-Speicherdruck.

**19.** Vorrichtung nach Anspruch 18, wobei die Ventile (V20a-V20c) zwischen dem Tankeinlass und dem Einlass des Ansaugstutzens (40) liegen.

**20.** Vorrichtung nach Anspruch 18 oder 19, wobei die auf den Anschluss einer Nachfüllleitung (10) ansprechenden Ventile (V20a-V20c) auf Druck ansprechende Rückschlagventile sind.

**21.** Vorrichtung nach einem der Ansprüche 18 bis 20, wobei ein Temperaturfühler zum Messen der Temperatur in jeder Tankeinheit (20a-20c) vorgesehen ist und die Steuereinrichtung die Ventile (V20a-V20c) in Abhängigkeit von dem Temperaturfühler steuert.

**22.** Vorrichtung nach einem der Ansprüche 18 bis 21, wobei ein oder mehrere der Tankeinheiten (20a-20c) zwei oder mehrere Tanks aufweisen, die so verbunden sind, dass sie als einzelner Tank wirken.

**23.** Vorrichtung nach einem der Ansprüche 18 bis 22, wobei die Steuereinrichtung (50) eine Logikschaltung ist.

**24.** Vorrichtung nach einem der Ansprüche 18 bis 23, wobei die Auslassventile von einem auf die Steuereinrichtung (50) ansprechenden Stellorgan betätigt sind.

**25.** Vorrichtung nach einem der Ansprüche 18 bis 24, wobei die Steuereinrichtung so ausgelegt ist, das sie den Ventilauslass jeder Tankeinheit (20a-20c) derart steuert, dass sie den Ventilauslass der Tankeinheit bei dem Schwellendruck gleichzeitig mit dem Öffnen des Ventilauslasses der nächsten Tankeinheit (20a-20c) oberhalb des Schwellendrucks schließt.

**26.** Vorrichtung nach einem der Ansprüche 18 bis 24, wobei die Steuereinheit so ausgelegt ist, dass sie den Ventilauslass jeder Tankeinheit (20a-20c) derart steuert, dass sie den Ventilauslass der Tankeinheit bei dem Schwellendruck nach dem Öffnen des Ventilauslasses der nächsten Tankeinheit (20a-20c) über dem Schwellendruck schließt.

**27.** Vorrichtung nach einem der Ansprüche 18 bis 26, wobei die Auslässe der einzelnen Tankeinheiten (20a-20c) mit einem Auslassstutzen (41) verbunden sind, der den einzelnen Tankauslässen jeweils zugeordnete schaltbare Einlassventile (41 Va-41 Vb) aufweist, um das Ausströmen von gasförmigem Wasserstoff aus den einzelnen Tankeinheiten (20a-20c) ventilmäßig zu steuern.

**28.** Fahrzeug mit einer Vorrichtung nach einem der Ansprüche 18 bis 26.

**29.** Fahrzeug nach Anspruch 28 mit einem Wasserstoff-Zellenstapel in Strömungsverbindung mit den Tankeinheiten (20a-20c), wobei gasförmiger Wasserstoff aus den Tankeinheiten dem Wasserstoff-Zellenstapel zugeführt werden kann.

**30.** Fahrzeug nach Anspruch 29, wobei die Logikschaltung in einem an Bord des Fahrzeugs vorhandenen Prozessor enthalten ist.

**31.** Verfahren zum Entleeren und Nachfüllen eines Tanksystems für gasförmigen Wasserstoff in einem Fahrzeug, wobei das System mehrere Tankeinheiten (20a-20c) zur Hochdruckspeicherung von gasförmigem Wasserstoff an Bord aufweist, mit einem Vorgang zum Entleeren der Tankeinheiten und einem Vorgang zum Nachfüllen der Tankeinheiten,

(A) wobei in dem Vorgang zum Entleeren der Tankeinheiten:

die Ventilanordnung an einem Auslass jeder Tankeinheit (20a-20c) so gesteuert wird, dass jeweils nur eine Tankeinheit (20a-20c) gleichzeitig entleert wird, der Wasserstoffdruck in der Tankeinheit (20a-20c), die entleert wird, gemessen wird, um zu erfassen, wann der Druck in dieser Gastankeinheit auf einen Schwellendruck abnimmt, und der Auslass einer gefüllten Tankeinheit (20a-20c) bei einem oberhalb des Schwellendrucks erfassten Druck ventilmäßig so gesteuert wird, dass er entleert wird, und

(B) wobei in dem Vorgang zum Nachfüllen des Wasserstofftanksystems auf einen Enddruck:

eine Einlassleitung (10) einer Tankstelle mit einem Einlassstutzen (30) des Wasserstofftanksystems verbunden wird, um Wasserstoff von der Einlassleitung (10) in jede der Tankeinheiten (20a-20c) bei dem Schwellendruck strömen zu lassen, und in einem Zustand, in dem eine Tankeinheit (20a-20c) auf einem Zwischendruck zwischen dem Schwellendruck und dem Enddruck entleert ist:

dann, wenn Tankeinheiten, die nachgefüllt werden, den Zwischendruck erreichen, der Einlass der Tankeinheiten (20a-20c) ventilmäßig so gesteuert wird, dass Wasserstoff gleichzeitig in die Tankeinheiten (20a-20c) bei dem Zwischendruck strömt, und dann, wenn sich keine Tankeinheiten, die nachgefüllt werden, auf dem Schwellendruck befinden, die Wasserstoffströmung ventilmäßig direkt auf den Zwischendruck gesteuert wird, bis der Druck in jeder Tankeinheit einen Enddruck gleich dem maximalen von der Nachfüllleitung zur Verfügung gestellten Versorgungsdruck oder einem maximalen Tankeinheit-Speicherdruck erreicht.

**32.** Verfahren nach Anspruch 31, wobei während der Entleerung der Tankeinheiten (20a-20c) der Einlass einer Tankeinheit (20a-20c) bei dem Schwellendruck nach Öffnen des Auslasses einer Tankeinheit (20a-20c) über dem Schwellendruck geschlossen wird.

**33.** Verfahren nach Anspruch 31, wobei während der Entleerung der Tankeinheiten (20a-20c) der Auslass einer Tankeinheit (20a-20c) bei dem Schwellendruck gleichzeitig mit dem Öffnen des Auslasses einer Tankeinheit (20a-20c) über dem Schwellendruck geschlossen wird.

**Revendications**

**1.** Dispositif comprenant une pluralité de réservoirs unitaires (20a à 20c) pour le stockage à bord d'un véhicule de gaz hydrogène sous haute pression :

chaque réservoir unitaire comprenant une vanne (V20a à V20c) ayant un orifice de sortie sensible à un moyen (50) de commande, des capteurs (60) de pression sensibles à chaque pression de réservoir unitaire pour engendrer un signal de pression, ledit moyen (50) de commande étant apte à réagir à un signal de mise en oeuvre de véhicule et audit signal de pression pour commander la séquence d'épuisement du gaz hydrogène de chaque réservoir unitaire (20a à 20c) en ouvrant, un à la fois, l'orifice de sortie de l'une des vannes (V20a à V20c) pour épuiser le gaz hydrogène d'un réservoir unitaire sélectionné, un à la fois, pour faire fonctionner le véhicule, jusqu'à ce que le réservoir unitaire soit épuisé jusqu'à une pression de seuil, ledit moyen (50) de commande étant apte à réagir audit signal de pression représentant une pression de seuil pour ouvrir l'orifice de sortie de l'une des vannes (V20a à V20c) d'un réservoir unitaire (20a à 20c) au-dessus de la pression de seuil, chaque réservoir unitaire (20a à 20c) étant connecté à un collecteur (40) d'entrée et à des vannes (40Va à 40Vc) réagissant à la connexion d'une canalisation (10) de remplissage au collecteur (40) d'entrée pour faire écouler du gaz hydrogène du collecteur (40) d'entrée dans un ou plusieurs desdits réservoirs unitaires (20a à 20c) qui sont au moins partiellement épuisés, **caractérisé en ce que** ledit moyen (50) de commande est apte à réagir auxdits capteurs (60) de pression détectant la pression dans lesdits réservoirs unitaires (20a à 20c) de chaque réservoir au moins partiellement épuisé pour commander les vannes pour faire écouler le gaz hydrogène pour remplir d'abord chaque réservoir unitaire (20a à 20c) le plus épuisé jusqu'à ce que la pression dans le réservoir unitaire (20a à 20c) le plus épuisé atteigne une pression finale égale à la pression maximale d'alimentation disponible à partir de la conduite de remplissage, ou une pression maximale de stockage de réservoir unitaire, et à réagir à un signal de pression de réservoir unitaire indiquant la présence d'un autre réservoir unitaire au moins partiellement épuisé pour commander alors les vannes pour diriger l'écoulement de gaz hydrogène pour remplir le nouveau réservoir unitaire le plus épuisé jusqu'à ce que chaque réservoir unitaire (20a à 20c) au moins partiellement épuisé soit rempli jusqu'à la pression finale.

2. Dispositif selon la revendication 1, dans lequel les vannes (V20a à V20c) sont interposées entre l'orifice d'entrée de réservoir et l'orifice d'entrée du collecteur (30) d'entrée.

3. Dispositif selon l'une quelconque des revendications précédentes, dans lequel l'orifice d'entrée de chaque vanne (V20a à V20c) est ouvert et fermé en réponse au moyen (50) de commande.

4. Dispositif selon l'une quelconque des revendications précédentes, dans lequel les vannes d'entrée de chaque réservoir embarqué sont des clapets de retenue sensibles à la pression.

5. Dispositif selon l'une quelconque des revendications précédentes, dans lequel le moyen de commande réagit à des capteurs (60) de température sensibles à la température de chaque réservoir (20a à 20c).

6. Dispositif selon l'une quelconque des revendications précédentes, dans lequel l'un quelconque ou plusieurs des réservoirs unitaires (20a à 20c) comprend deux réservoirs ou plus connectés pour se comporter comme un unique réservoir.

7. Dispositif selon l'une quelconque des revendications précédentes, dans lequel le moyen (50) de commande est un circuit logique.

8. Dispositif selon l'une quelconque des revendications précédentes, dans lequel les vannes de sortie sont mises en oeuvre par un actionneur réagissant au moyen (50) de commande.

9. Dispositif selon l'une quelconque des revendications précédentes, dans lequel le moyen de commande est apte à commander l'orifice de sortie de vanne de chaque réservoir unitaire (20a à 20c) pour fermer l'orifice de sortie de vanne du réservoir unitaire à la pression de seuil simultanément avec l'ouverture de l'orifice de sortie de vanne sur le prochain réservoir unitaire (20a à 20c) au-dessus de la pression de seuil.

10. Dispositif selon l'une quelconque des revendications 1 à 8, dans lequel le moyen de commande est apte à commander l'orifice de sortie de vanne de chaque réservoir unitaire (20a à 20c) pour fermer l'orifice de sortie de vanne du réservoir unitaire à la pression de seuil après l'ouverture de l'orifice de sortie de vanne sur le prochain réservoir unitaire (20a à 20c) au-dessus de la pression de seuil.

11. Dispositif selon l'une quelconque des revendications précédentes, dans lequel les orifices de sortie de chaque réservoir unitaire (20a à 20c) communiquent avec un collecteur (41) de sortie, ledit collecteur de sortie ayant des vannes d'entrée commutables (41Va à 41Vc) associées chacune avec chaque orifice de sortie de réservoir, pour piloter le flux de sortie de gaz hydrogène de chaque réservoir unitaire (20a à 20c).

12. Véhicule comprenant le dispositif selon l'une quelconque des revendications précédentes.

13. Véhicule selon la revendication 12, dans lequel le véhicule possède un bloc de piles à combustible à hydrogène en communication fluidique avec les réservoirs unitaires (20a à 20c) en permettant ainsi que du gaz hydrogène provenant des réservoirs unitaires soit délivré au bloc de piles à combustible à hydrogène.

14. Véhicule selon la revendication 12, dans lequel le circuit logique est inclus dans une CPU embarquée sur le véhicule.

15. Procédé d'épuisement et de remplissage d'un système de réservoirs de gaz hydrogène dans un véhicule, ledit système comprenant une pluralité de réservoirs unitaires (20a à 20c) pour le stockage à bord de gaz hydrogène sous haute pression comprenant : un traitement d'épuisement des réservoirs unitaires et un traitement de remplissage des réservoirs unitaires :

(A) le traitement d'épuisement desdits réservoirs unitaires comprenant les étapes :

de pilotage d'un orifice de sortie de chaque réservoir unitaire (20a à 20c) pour épuiser seulement un réservoir unitaire (20a à 20c) à la fois ;

de détection de la pression de gaz hydrogène dans le réservoir unitaire (20a à 20c) en cours d'épuisement pour détecter le moment où la pression gazeuse de réservoir unitaire en cours d'épuisement tombe à une pression de seuil ;

de pilotage de l'orifice de sortie d'un réservoir unitaire chargé (20a à 20c) à une pression détectée au-dessus de la pression de seuil jusqu'à épuisement ; et

(B) le traitement de remplissage dudit système de réservoirs d'hydrogène jusqu'à une pression finale comprenant les étapes :

(i) de connexion d'une canalisation (10) d'entrée d'un poste de remplissage à un collecteur (30) d'entrée du système de réservoirs d'hydrogène ;

(ii) de détection des pressions de réservoir unitaire pour commander l'écoulement de gaz hydrogène du collecteur (30) d'entrée vers chaque réservoir unitaire (20a à 20c) le plus épuisé pour remplir lesdits réservoirs unitaires les plus épuisés jusqu'à ce que la pression qui y est détectée atteigne une pression finale égale à la pression maximale d'alimentation ou à la pression maximale de stockage de réservoir unitaire ;

(iii) de détection de la pression de réservoir unitaire pour détecter tout prochain réservoir unitaire le plus épuisé et pour diriger l'écoulement du gaz hydrogène pour remplir jusqu'à la pression finale le prochain réservoir unitaire le plus épuisé ;

(iv) de répétition de l'étape (iii) jusqu'à ce que tous les réservoirs unitaires soient remplis jusqu'à la pression finale.

**16.** Procédé selon la revendication 15, comprenant l'étape, pendant le traitement d'épuisement des réservoirs unitaires (20a à 20c), de fermeture de l'orifice de sortie d'un réservoir unitaire (20a à 20c) à la pression de seuil après ouverture de l'orifice de sortie d'un réservoir unitaire (20a à 20c) au-dessus de la pression de seuil.

**17.** Procédé selon la revendication 15, comprenant l'étape, pendant le traitement d'épuisement des réservoirs unitaires (20a à 20c), de fermeture de l'orifice de sortie d'un réservoir unitaire (20a à 20c) à la pression de seuil simultanément avec l'ouverture de l'orifice de sortie d'un réservoir unitaire (20a à 20c) au-dessus de la pression de seuil.

**18.** Dispositif comprenant une pluralité de réservoirs unitaires (20a à 20c) pour le stockage à bord d'un véhicule de gaz hydrogène sous haute pression :

chaque réservoir unitaire comprenant une vanne (V20a à V20c) ayant un orifice de sortie sensible à un moyen (50) de commande,

des capteurs (60) de pression sensibles à chaque pression de réservoir unitaire pour engendrer un signal de pression,

ledit moyen (50) de commande étant apte à réagir à un signal de mise en oeuvre de véhicule et audit signal de pression pour commander la séquence d'épuisement du gaz hydrogène de chaque réservoir unitaire (20a à 20c) en ouvrant, un à la fois, l'orifice de sortie de l'une des vannes (V20a à V20c) pour épuiser le gaz hydrogène d'un réservoir unitaire sélectionné, un à la fois, pour faire fonctionner le véhicule, jusqu'à ce que le réservoir unitaire soit épuisé jusqu'à une pression de seuil,

ledit moyen (50) de commande étant apte à réagir audit signal de pression représentant une pression de seuil pour ouvrir l'orifice de sortie de l'une des vannes (V20a à V20c) d'un réservoir unitaire (20a à 20c) au-dessus de la pression de seuil,

chaque réservoir unitaire (20a à 20c) étant connecté à un collecteur (40) d'entrée et à des vannes (40Va à 40Vc) réagissant à la connexion d'une canalisation (10) de remplissage au collecteur (40) d'entrée pour faire écouler du gaz hydrogène du collecteur (40) d'entrée dans un ou plusieurs desdits réservoirs unitaires (20a à 20c) qui sont au moins partiellement épuisés, **caractérisé :**

**en ce que**, dans un état dans lequel un réservoir unitaire (20a à 20c) est partiellement épuisé jusqu'à une pression intermédiaire entre la pression de seuil et la pression maximale de stockage de réservoir unitaire, lesdites vannes (V20a à V20c) réagissent :

à tout remplissage des réservoirs unitaires (20a à 20c) atteignant ladite pression intermédiaire pour faire écouler simultanément du gaz hydrogène dans lesdits réservoirs unitaires (20a à 20c) partiellement épuisés ; ou
en l'absence de réservoirs unitaires à la pression de seuil, pour faire écouler du gaz hydrogène dans ledit réservoir unitaire à ladite pression intermédiaire, jusqu'à ce que la pression dans chaque réservoir unitaire épuisé, ou partiellement épuisé, atteigne une pression finale égale ou inférieure à la pression maximale d'alimentation disponible à partir de la canalisation de remplissage, ou à la pression maximale de stockage de réservoir unitaire.

**19.** Dispositif selon la revendication 18, dans lequel les vannes (V20a à V20c) sont interposées entre l'orifice d'entrée de réservoir et l'orifice d'entrée du collecteur (40) d'entrée.

**20.** Dispositif selon la revendication 18 ou 19, dans lequel les vannes (V20a à V20c) réagissant à la connexion d'une canalisation (10) de remplissage sont des clapets de retenue sensibles à la pression.

**21.** Dispositif selon l'une quelconque des revendications 18 à 20, dans lequel un capteur de température est prévu pour mesurer la température dans chaque réservoir unitaire (20a à 20c) et dans lequel ledit moyen de commande commande les vannes (V20a à V20c) en réponse au capteur de température.

**22.** Dispositif selon l'une quelconque des revendications 18 à 21, dans lequel l'un quelconque ou plusieurs des réservoirs unitaires (20a à 20c) comprend deux réservoirs ou plus connectés pour se comporter comme un unique réservoir.

**23.** Dispositif selon l'une quelconque des revendications 18 à 22, dans lequel le moyen (50) de commande est un circuit logique.

**24.** Dispositif selon l'une quelconque des revendications 18 à 23, dans lequel les orifices de sortie de vanne sont mis en oeuvre par un actionneur réagissant au moyen (50) de commande.

**25.** Dispositif selon l'une quelconque des revendications 18 à 24, dans lequel le moyen de commande est apte à commander l'orifice de sortie de vanne de chaque réservoir unitaire (20a à 20c) pour fermer l'orifice de sortie de vanne du réservoir unitaire à la pression de seuil simultanément avec l'ouverture de l'orifice de sortie de vanne sur le prochain réservoir unitaire (20a à 20c) au-dessus de la pression de seuil.

**26.** Dispositif selon l'une quelconque des revendications 18 à 25, dans lequel le moyen de commande est apte à commander l'orifice de sortie de vanne de chaque réservoir unitaire (20a à 20c) pour fermer l'orifice de sortie de vanne du réservoir unitaire à la pression de seuil après l'ouverture de l'orifice de sortie de vanne sur le prochain réservoir unitaire (20a à 20c) au-dessus de la pression de seuil.

**27.** Dispositif selon l'une quelconque des revendications 18 à 26, dans lequel les orifices de sortie de chaque réservoir unitaire (20a à 20c) communiquent avec un collecteur (41) de sortie, ledit collecteur de sortie ayant des vannes d'entrée commutables (41Va à 41Vc) associées chacune avec chaque orifice de sortie de réservoir, pour piloter le flux de sortie de gaz hydrogène de chaque réservoir unitaire (20a à 20c).

**28.** Véhicule comprenant le dispositif selon l'une quelconque des revendications 18 à 26.

**29.** Véhicule selon la revendication 28, dans lequel le véhicule possède un bloc de piles à combustible à hydrogène en communication fluidique avec les réservoirs unitaires (20a à 20c) en permettant ainsi que du gaz hydrogène provenant des réservoirs unitaires soit délivré au bloc de piles à combustible à hydrogène.

**30.** Véhicule selon la revendication 29, dans lequel le circuit logique est inclus dans une CPU embarquée sur le véhicule.

**31.** Procédé d'épuisement et de remplissage d'un système de réservoirs de gaz hydrogène dans un véhicule, ledit système comprenant une pluralité de réservoirs unitaires (20a à 20c) pour le stockage à bord de gaz hydrogène sous haute pression comprenant : un traitement d'épuisement des réservoirs unitaires et un traitement de remplissage des réservoirs unitaires :

(A) le traitement d'épuisement dudit système comprenant les étapes :

de commande de pilotage d'un orifice de sortie de chaque réservoir unitaire (20a à 20c) pour épuiser seulement un réservoir unitaire (20a à 20c) à la fois ; de détection de la pression de gaz hydrogène dans le réservoir unitaire (20a à 20c) en cours d'épuisement pour détecter le moment où la pression gazeuse de réservoir unitaire en cours d'épuisement tombe à une pression de seuil ; de pilotage de l'orifice de sortie d'un réservoir unitaire chargé (20a à 20c) à une pression détectée au-dessus de la pression de seuil jusqu'à épuisement ; et

(B) le traitement de remplissage dudit système de réservoirs de gaz hydrogène jusqu'à une pression finale comprenant les étapes :

de connexion d'une canalisation (10) d'entrée d'un poste de remplissage à un collecteur (40) d'entrée du système de réservoirs d'hydrogène pour faire écouler du gaz hydrogène de la canalisation (10) d'entrée dans l'un quelconque des réservoirs unitaires (20a à 20c) à la pression de seuil, et dans un état où un réservoir unitaire (20a à 20c) est épuisé jusqu'à une pression intermédiaire entre la pression de seuil et la pression finale ;

lorsque l'un quelconque des réservoirs unitaires à remplir atteint ladite pression intermédiaire, de pilotage de l'orifice d'entrée desdits réservoirs unitaires (20a à 20c) pour faire écouler du gaz hydrogène dans lesdits réservoirs unitaires (20a à 20c) à la pression intermédiaire ; et

en l'absence de l'un quelconque des réservoirs unitaires à remplir à la pression de seuil, de pilotage de l'écoulement de gaz hydrogène directement vers ledit réservoir à la pression intermédiaire, jusqu'à ce que la pression dans chaque réservoir unitaire atteigne une pression finale égale à l'une de la pression d'alimentation maximale disponible à partir de la canalisation de remplissage, ou de la pression maximale de stockage de réservoir unitaire.

**32.** Procédé selon la revendication 31, comprenant l'étape, pendant le traitement d'épuisement des réservoirs unitaires (20a à 20c), de fermeture de l'orifice de sortie d'un réservoir unitaire (20a à 20c) à la pression de seuil après ouverture de l'orifice de sortie d'un réservoir unitaire (20a à 20c) au-dessus de la pression de seuil.

**33.** Procédé selon la revendication 32, comprenant l'étape, pendant le traitement d'épuisement des réservoirs unitaires (20a à 20c), de fermeture de l'orifice de sortie d'un réservoir unitaire (20a à 20c) à la pression de seuil simultanément avec l'ouverture de l'orifice de sortie d'un réservoir unitaire (20a à 20c) au-dessus de la pression de seuil.

**_Figure 1_**

PRIOR ART

HYDROGEN FUELING STATION REFILL NOZZLE

| HYDROGEN FLOW | |
|---|---|
| REFUEL | ⟹ |
| CONSUMPTION | ⟹ |

TO FUEL CELL STACK OR ENGINE

**_Figure 2A_**

EP 1 800 930 B1

*Figure 2B*

EP 1 800 930 B1

Figure 3B

TANK PRESSURE (ATM)

Figure 3A

TANK PRESSURE (ATM)

**Figure 4**

IGNITION *ON* : z = n

Is $P_z > P_{threshold}$?

Yes → Operate vehicle

No

Is z = 1?

Yes → Shutdown operation

No

Open solenoid valve for Tank z-1

Close solenoid valve for Tank z

z = z-1

n = number of tanks

EP 1 800 930 B1

Figure 5

HYDROGEN STATION STORAGE BANK PRESSURES

EP 1 800 930 B1

Figure 6

Figure 7A

*Figure 7B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004005792 A